# EUROPEAN PATENT APPLICATION

(11) **EP 4 265 577 A1**
(43) Date of publication of application: **25.10.2023**
(21) Application number: 22767396.9
(22) Date of filing: 03.03.2022
(51) Int. Cl.: C03C 17/34, C09D 183/04, C09D 133/00, C09D 175/04, C09D 129/04

(54) **THIN FILM GLASS MODULE AND ELECTRONIC APPARATUS COMPRISING SAME**

(30) Priority: 08.03.2021 KR 20210030356
(71) Applicant: Samsung Electronics Co., Ltd., Suwon-si, Gyeonggi-do 16677 (KR)
(72) Inventor: LEE, Wonsun, Suwon-si, Gyeonggi-do 16677 (KR); OH, Jeonghyun, Suwon-si, Gyeonggi-do 16677 (KR); LEE, Hosoon, Suwon-si, Gyeonggi-do 16677 (KR); CHOI, Hyunsuk, Suwon-si, Gyeonggi-do 16677 (KR)
(74) Representative: HGF
(86) International application number: PCT/KR2022/003001
(87) International publication number: WO 2022/191500

(57) **Abstract**

A thin-film glass module according to an embodiment includes coating layers above and below a thin-film glass so that resilience, elasticity, and strength characteristics are reinforced, and, in particular, may have improved impact resistance by absorbing impact such as a pen drop in the coating layers. A thin-film glass module according to various embodiments may include a thin film glass having a predetermined thickness and a flat shape, a first coating layer disposed above the thin film glass, and a second coating layer disposed below the thin film glass.

## Description

### Technical Field

The present disclosure relates to a thin-film glass module and an electronic device including the same.

### Background Art

Recently, there is a need for electronic devices including smartphones, tablet personal computers (PCs), or wearable devices to have a cover window member capable of securing brittleness to prevent breakage and also to have bending performance according to folding of a flexible display.

To this end, a polymer-based thin film such as polyimide having favorable optical properties is being used, or a bendable thin film glass is being introduced. However, a polymer thin film such as polyimide is advantageous in bending performance and brittleness, but lacks the ability to maintain flatness compared to thin-film glass. In addition, thin-film glass is advantageous in optical characteristics and flatness, but can be easily broken due to its weak brittle strength.

### Disclosure

### Technical Problem

Provided is a thin-film glass module implementing coating layers for impact compensation above and below and thereby having improved impact resistance due to dispersion of impact forces on the thin-film glass and having strength characteristics and folding characteristics.. Also provided is an electronic device including the thin-film glass module.

### Technical Solution

A thin-film glass module according to an example may include a thin film glass having a predetermined thickness and a flat shape, a first coating layer disposed above the thin film glass, and a second coating layer disposed below the thin film glass.

The first coating layer and the second coating layer may have elastic moduli of 0.3 MPa to 1500 MPa.

The first coating layer and the second coating layer may have thicknesses of 5 µm to 200 µm.

The first coating layer and the second coating layer may include one or more of a silicon-based material, acrylic and urethane-based materials, and a PVA-based material.

The thin-film glass module may further include a connection portion extending along a circumference of the thin film glass and connecting the first coating layer to the second coating layer.

The first coating layer, the connection portion, and the second coating layer may be integrally formed with one another.

The first coating layer and the second coating layer may include the same materials, and a ratio of a first thickness of the first coating layer to a second thickness of the second coating layer may be 0.1 to 2.

The first coating layer and the second coating layer may include different materials, and a ratio of a first elastic modulus of the first coating layer to a second elastic modulus of the second coating layer may be more than 0 to 1.

The thin film glass may have a thickness of 100 µm or less.

The thin film glass may include at least one of a material for chemical curing or a material for thermal curing.

A thin-film glass module according to various embodiments include a thin film glass having a predetermined thickness and a flat shape, a 1-1^{st} coating layer having a predetermined first width, extending along a circumference of the thin film glass, and disposed above the thin film glass, a 2-1^{st} coating layer having a predetermined second width, extending along the circumference of the thin film glass, and disposed below the thin film glass, and a connection portion extending along the circumference of the thin film glass and connecting the 1-1^{st} coating layer to the 2-1^{st} coating layer.

The first width D2 of the 1-1^{st} coating layer in one direction may be 4.0 mm or less, the second width D3 of the 2-1^{st} coating layer in one direction may be 4.0 mm or less and extend along the circumference of the thin film glass, and a width D1 of the connecting portion connecting the 1-1^{st} coating layer to the 2-1^{st} coating layer may be 0.1 mm or more.

The 1-1^{st} coating layer and the 2-1^{st} coating layer may have an elastic moduli of 0.3 MPa to 1500 MPa.

The thin-film glass module may further include a first coating layer disposed over an upper surface of the thin film glass, between the upper surface of the thin film glass and the 1-1^{st} coating layer, and a second coating layer disposed over a lower surface of the thin film glass, between the lower surface of the thin film glass and the 2-1^{st} coating layer.

The 1-1^{st} coating layer and the 2-1^{st} coating layer may include one or more of a silicon-based material, acrylic and urethane-based materials, and a PVA-based material.

The 1-1^{st} coating layer, the connection portion, and the 2-1^{st} coating layer may be integrally formed with one another.

The 1-1^{st} coating layer and the 2-1^{st} coating layer may extend along a bending area bent to have a predetermined radius of curvature among the circumference of the thin film glass.

The thin film glass may have a radius of curvature of 0.5 mm or less in the bending area.

The thin film glass may have a thickness of 100 µm or less.

An electronic device according to various embodiments includes the thin-film glass module and a display module disposed below the thin-film glass module.

### Advantageous Effects

A thin-film glass module according to an embodiment includes coating layers above and below a thin-film glass so that resilience, elasticity, and strength characteristics are reinforced, and, in particular, may have improved impact resistance by absorbing impact such as a pen drop in the coating layers.

The thin-film glass module according to an embodiment may include coating layers along a circumference of a thin film glass to thereby improve strength and impact resistance of an edge of the thin film glass.

The thin-film glass module according to an embodiment may resolve stress caused by a difference between thicknesses of a flat area and a bending area of the thin film glass which is caused by slimming an existing folding area, and thus not only may improve impact resistance but also minimize screen distortion or resolution deterioration to thereby provide a high-quality flexible display.

### Description of Drawings

FIG. 1 is a block diagram of an electronic device 1 in a network environment N, according to various embodiments.
FIG. 2 is a perspective view of an electronic device according to various embodiments.
FIG. 3A is an exploded perspective view of the electronic device of FIG. 2.
FIG. 3B is a front view of a thin-film glass module according to various embodiments.
FIG. 4A is a cross-sectional view of a thin-film glass module taken along line A-A' shown in FIG. 3B.
FIG. 4B is a cross-sectional view of a thin-film glass module taken along line A-A' shown in FIG. 3B.
FIG. 5A is a partial cross-sectional view of a thin-film glass module taken along line A-A' shown in FIG. 3B.
FIG. 5B is a partial cross-sectional view of a thin-film glass module taken along line A-A' shown in FIG. 3B.
FIG. 5C is a partial cross-sectional view of a thin-film glass module taken along line A-A' shown in FIG. 3B.
FIG. 5D is a partial cross-sectional view of a thin-film glass module taken along line A-A' shown in FIG. 3B.
FIG. 6 is a schematic diagram of application of a pen drop impact to a thin-film glass module according to various embodiments.
FIG. 7A is a front view of a thin-film glass module according to various embodiments.
FIG. 7B is a cross-sectional view of a thin-film glass module taken along line B-B' shown in FIG. 7A.
FIG. 8A is a front view of a thin-film glass module according to various embodiments.
FIG. 8B is a cross-sectional view of a thin-film glass module taken along line C-C' shown in FIG. 8A.
FIG. 9A is a front view of a thin-film glass module according to various embodiments.
FIG. 9B is a perspective view of a thin-film glass module according to various embodiments.
FIG. 9C is a cross-sectional view of a thin-film glass module taken along line D-D' shown in FIG. 9A.
FIG. 9D is a cross-sectional view of a thin-film glass module taken along line E-E' shown in FIG. 9A.
FIG. 10A is a front view of a thin-film glass module according to various embodiments.
FIG. 10B is a perspective view of a thin-film glass module according to various embodiments.
FIG. 10C is a cross-sectional view of a thin-film glass module taken along line G-G' shown in FIG. 10A.

### Mode for Invention

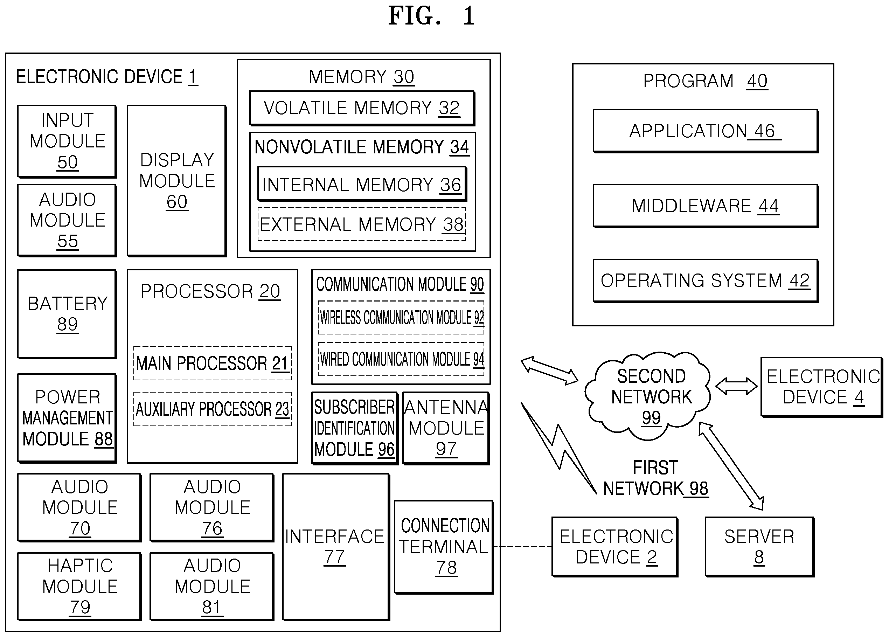

FIG. 1 is a block diagram of an electronic device 1 in a network environment N, according to various embodiments. Referring to FIG. 1, in the network environment N, the electronic device 1 may communicate with an electronic device 2 through a first network 98 (e.g., a short-range wireless communication network), or may communicate with an electronic device 4 and/or a server 8 through a second network 99 (e.g., a long-range wireless communication network). According to an embodiment, the electronic device 1 may communicate with the electronic device 4 via the server 8. According to an embodiment, the electronic device 1 may include a processor 20, a memory 30, an input module 50, a sound output module 55, a display module 60, an audio module 70, a sensor module 76, an interface 77, a connection terminal 78, a haptic module 79, a camera module 81, a power management module 88, a battery 89, a communication module 90, a subscriber identification module 96, and an antenna module 97. In some embodiments, at least one (e.g., the connection terminal 78) of these components may be omitted, or one or more other components may be added to the electronic device 1. In some embodiments, some (e.g., the sensor module 76, the camera module 81, or the antenna module 97) of these components may be integrated into one component (e.g., the display module 60).

The processor 20 may control one or more other components (e.g., hardware or software components) of the electronic device 1 connected to the processor 20 by executing software (e.g., a program 40), and may perform various data processing or calculations. According to an embodiment, as part of the data processing or calculations, the processor 20 may load, in a volatile memory 32, commands or data received from another component (e.g., the sensor module 76 or the communication module 90), process the command or data stored in the volatile memory 32, and store result data in a non-volatile memory 34. According to an embodiment, the processor 20 may include a main processor 21 (e.g., a central processing unit (CPU) or an application processor) or an auxiliary processor 23 (e.g., a graphics processing unit (GPU), a neural processing unit (NPU), an image signal processor, a sensor hub processor, or a communication processor) that is operable independently of or together with the main processor 21. For example, when the electronic device 1 includes the main processor 21 and the auxiliary processor 23, the auxiliary processor 23 may use less power than the main processor 21, or may be set to be specialized for a specified function. The auxiliary processor 23 may be implemented separately from or as part of the main processor 21.

Instead of the main processor 21 when the main processor 21 is in an inactive state (e.g., a sleep state), or together with the main processor 21 when the main processor 21 is in an active state (e.g., an application execution state), the auxiliary processor 23 may control at least some of the functions or states related to at least one component (e.g., the display module 60, the sensor module 76, or the communication module 90) of the components of the electronic device 1. According to an embodiment, the auxiliary processor 23 (e.g., an image signal processor or a communication processor) may be implemented as a part of functionally related other components (e.g., the camera module 81 or the communication module 90). According to an embodiment, the auxiliary processor 23 (e.g., an NPU) may include a hardware structure specialized in processing an artificial intelligence (AI) model. The AI model may be created through machine learning. Such learning may be performed in the electronic device 1 on which the AI model is performed, or may be performed through a separate server (e.g., the server 8). Examples of a learning algorithm include, but are not limited to, supervised learning, unsupervised learning, semi-supervised learning, or reinforcement learning. The AI model may include a plurality of artificial neural network layers. An artificial neural network may be, but is not limited to, a Deep Neural Network (DNN), a Convolutional Neural Network (CNN), a Recurrent Neural Network (RNN), a Restricted Boltzmann Machine (RBM), a Deep Belief Network (DBN), a Bidirectional Recurrent Deep Neural Network (BRDNN), or Deep Q-Networks, or a combination thereof. The AI model may include, additionally or alternatively, a software structure in addition to the hardware structure.

The memory 30 may store various data used by at least one component of the electronic device 1 (e.g., the processor 20 or the sensor module 76). The data may include, for example, software (e.g., the program 40) and input data or output data about commands related to the software. The memory 30 may include the volatile memory 32 or the non-volatile memory 34.

The program 40 may be stored as software in the memory 30, and may include, for example, an operating system 42, middleware 44, or an application 46.

The input module 50 may receive a command or data to be used for a component (e.g., the processor 20) of the electronic device 1, from the outside (e.g., a user) of the electronic device 1. The input module 50 may include, for example, a microphone, a mouse, a keyboard, a key (e.g., a button), or a digital pen (e.g., a stylus pen).

The sound output module 55 may output an audio signal to the outside of the electronic device 1. The sound output module 55 may include, for example, a speaker or a receiver. The speaker may be used for general purposes such as multimedia playback or recording playback. The receiver may be used to receive incoming calls. According to an embodiment, the receiver may be implemented separately from or as part of the speaker.

The display module 60 may visually provide information to the outside (e.g., a user) of the electronic device 1. The display module 60 may include, for example, a display, a hologram device, or a projector, and a control circuit to control a corresponding device. According to an embodiment, the display module 60 may include a touch sensor configured to sense a touch, or a pressure sensor configured to measure the intensity of a force generated by the touch.

The audio module 70 may convert sound into electrical signals or alternately electrical signals into sound. According to an embodiment, the audio module 70 may obtain sound through the input module 50, or may output sound through the sound output module 55 or an external electronic device (e.g., the electronic device 2) (e.g., a speaker or a headphone) directly or wirelessly connected to the electronic device 1.

The sensor module 76 may detect an operation state (e.g., power or a temperature) of the electronic device 1, or an external environment state (e.g., a user state), and may generate an electrical signal or data value corresponding to the detected state. According to an embodiment, the sensor module 76 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 77 may support one or a plurality of specified protocols that may be used for the electronic device 1 to be connected to another electronic device (e.g., the electronic device 2) directly or wirelessly. According to an embodiment, the interface 77 may include, for example, a high definition multimedia interface (HDMI), a universal serial bus (USB) interface, an SD card interface, or an audio interface.

The connection terminal 78 may include a connector through which the electronic device 1 may be physically connected to an external electronic device (e.g., the electronic device 2). According to an embodiment, the connection terminal 78 may include, for example, an HDMI connector, a USB connector, an SD card connector, or an audio connector (e.g., a headphone connector).

The camera module 81 may capture a still image and a video. According to an embodiment, the camera module 81 may include one or more lenses, image sensors, image signal processors, or flashes. According to an embodiment, the electronic device 1 may include a plurality of camera modules 81 having different attributes or functions. In this case, for example, at least one of the plurality of camera modules 81 may be a wide angle camera, and at least another may be a telescopic camera. Similarly, at least one of the plurality of camera modules 81 may be a front side camera, and at least another may be a rear side camera.

The haptic module 79 may convert electrical signals into mechanical stimuli (e.g., vibrations or movements) or electrical stimuli that are perceivable by a user through tactile or motor sensations. According to an embodiment, the haptic module 79 may include, for example, a motor, a piezoelectric device, or an electrical stimulation device.

The power management module 88 may manage the power supplied to the electronic device 1. According to an embodiment, the power management module 88 may be implemented as at least a part of a power management integrated circuit (PMIC).

The battery 89 may supply power to at least one of the components of the electronic device 1. According to an embodiment, the battery 89 may include non-rechargeable primary cells, rechargeable secondary cells, or fuel cells.

The communication module 90 may establish a direct (e.g., wired) communication channel and/or a wireless communication channel between the electronic device 1 and an external electronic device (e.g., the electronic device 2, the electronic device 4, or the server 8), and may support a communication through an established communication channel. The communication module 90 may be operated independently of the processor 20 (e.g., an application processor), and may include one or more communication processors supporting a direct (e.g., wired) communication and/or a wireless communication. According to an embodiment, the communication module 90 may include a wireless communication module 92 (e.g., a cellular communication module, a short-range wireless communication module, or a global navigation satellite system (GNSS) communication module), or a wired communication module 94 (e.g., a local area network (LAN) communication module or a power line communication module). Among the above communication modules, a corresponding communication module may communicate with the external electronic device 4 through the first network 98 (e.g., a short-range communication network such as Bluetooth, WiFi Direct, or infrared data association (IrDA)) or the second network 99 (e.g., a long-range communication network such as a cellular network, a 5G network, a next generation network, the Internet, or a computer network (e.g., LAN or WAN)). These various types of communication modules may be integrated into one component (e.g., a single chip), or may be implemented as a plurality of separate components (e.g., multiple chips). The wireless communication module 92 may verify or authenticate the electronic device 1 in a communication network such as the first network 98 or the second network 99 by using subscriber information (e.g., an international mobile subscriber identifier (IMSI)) stored in the subscriber identification module 96.

The wireless communication module 92 may support a 5G network after a 4G network and a next-generation communication technology, for example, a new radio (NR) access technology. The NR access technology is high-speed transmission of high-capacity data (e.g., an enhanced mobile broadband (eMBB)), terminal power minimization and access of multiple terminals (e.g., massive machine type communications (mMTC)), or high reliability and low latency (e.g., ultra-reliable and low-latency communications (URLLC)). The wireless communication module 92 may, for example, support a high frequency band (e.g., mmWave band) in order to achieve a high data rate. The wireless communication module 92 may support various technologies for securing performance in a high-frequency band, for example, beamforming, massive multiple-input and multiple-output (MIMO), full dimensional MIMO (FD-MIMO), array antenna, analog beam-forming, or large scale antenna. The wireless communication module 92 may support various requirements specified in the electronic device 1, an external electronic device (e.g., the electronic device 4), or a network system (e.g., the second network 99). According to an embodiment, the wireless communication module 92 may support a peak data rate (e.g., 20 Gbps or more) for realizing eMBB, a loss coverage (e.g., 164 dB or less) for realizing mMTC, or a U-plane latency (e.g., each of a downlink (DL) and an uplink (UL) having 0.5 ms or less, or a round trip of 1 ms or less) for realizing URLLC.

The antenna module 97 may transmit signals or power to the outside (e.g., an external electronic device) or receive signals or power from the outside. According to an embodiment, the antenna module 97 may include an antenna including a conductor formed on a substrate (e.g., a printed circuit board (PCB)) or a radiator formed of a conductive pattern. According to an embodiment, the antenna module 97 may include a plurality of antennas (e.g., an array antenna). In this case, at least one antenna suitable for a communication scheme used in a communication network such as the first network 98 or the second network 99 may be selected from the plurality of antennas by, for example, the communication module 90. Signals or power may be transmitted or received between the communication module 90 and another electronic device through the selected at least one antenna. According to some embodiments, other components (e.g., a radio frequency integrated circuit (RFIC)) other than the radiator may be additionally formed as a part of the antenna module 97.

According to various embodiments, the antenna module 97 may form a mmWave antenna module. According to an embodiment, the mmWave antenna module may include a PCB, an RFIC disposed on or adjacent to a first side (e.g., a bottom surface) of the PCB and capable of supporting a designated high frequency band (e.g., an mmWave band), and a plurality of antennas (e.g., an array antenna) disposed on or adjacent to a second side (e,g., a top or lateral surface) of the PCB and capable of transmitting or receiving signals of the designated high frequency band.

At least some of the components may be connected to each other through a communication method between peripheral devices (e.g., a bus, general purpose input and output (GPIO), a serial peripheral interface (SPI), or a mobile industry processor interface (MIPI)) and may mutually exchange signals (e.g., commands or data).

According to an embodiment, the commands or data may be transmitted or received between the electronic device 1 and the external electronic device 4 through the server 8 connected to the second network 99. Each of the external electronic devices 2 and 4 may be of the same type as or a different type from the electronic device 1. According to an embodiment, all or some of operations executed in the electronic device 1 may be executed in one or a plurality of the external electronic devices, namely, the electronic devices 2 and 4 or the server 8. For example, when the electronic device 1 needs to perform a function or service automatically or in response to a request from a user or another device, the electronic device 1 may request one or a plurality of electronic devices to perform part or the whole of the function or service, instead of performing the function or service or in addition to performing the function or service. The one or plurality of the electronic devices receiving the request may execute at least a portion of the requested function or service or an additional function or service related to the request, and may transmit a result of the execution to the electronic device 1. The electronic device 1 may process the received result without changes or additionally, and provide a processed result as at least a portion of a response to the request. To this end, for example, cloud computing, distributed computing, mobile edge computing (MEC), or client-server computing may be used. The electronic device 1 may provide ultra-low latency services by using, for example, the distributed computing or the MEC. According to another embodiment, the external electronic device 4 may include an Internet of things (loT) device. The server 8 may be an intelligent server using machine learning and/or neural networks. According to an embodiment, the external electronic device 4 or the server 8 may be included in the second network 99. The electronic device 1 is applicable to intelligent services based on the 5G communication technology and the loT related technology (e.g., smart home, smart city, smart car, or health care).

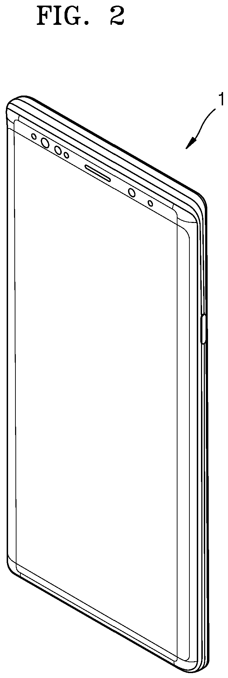

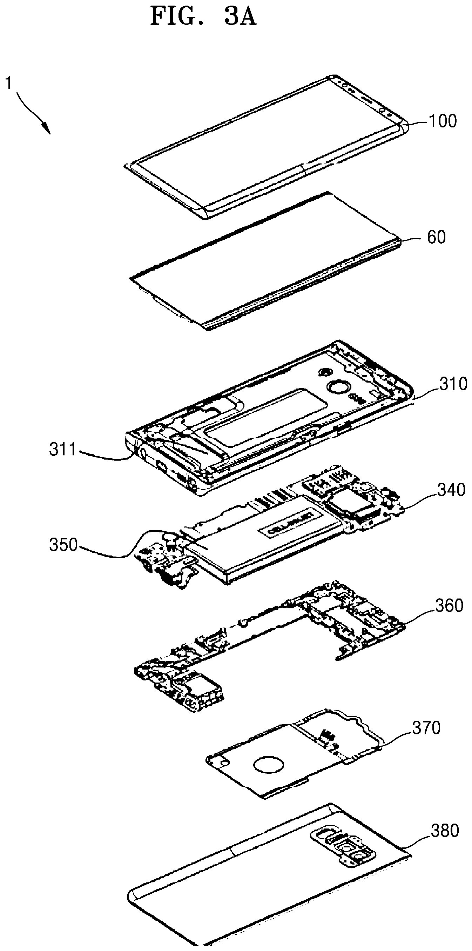

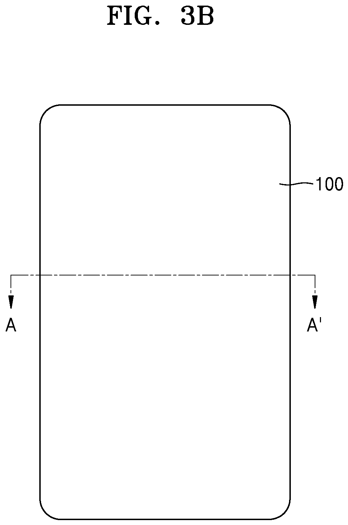

FIG. 2 is a perspective view of an electronic device according to various embodiments. FIG. 3A is an exploded perspective view of the electronic device of FIG. 2. FIG. 3B is a front view of a thin-film glass module according to various embodiments.

Referring to FIGS. 2 through 3B, the electronic device 1 according to an embodiment may include a thin-film glass module 100, a first housing 310, a first support member 311 (e.g., a bracket), a display module 60, a PCB 340, a battery 350, a second support member 360, an antenna 370, and a second housing 380.

The first support member 311 may be disposed inside the electronic device 1 and connected to the first housing 310 or integrally formed with the first housing 310. The first support member 311 may be formed of, for example, a metal material and/or a non-metal (e.g., polymer) material. The display module 60 may be coupled to one surface of the first support member 311 and the PCB 340 may be coupled to another surface of the first support member 311. A processor, a memory, and/or an interface may be mounted on the PCB 340. The processor may include, for example, one or more of a CPU, an application processor, a graphics processing unit, an image signal processor, a sensor hub processor, or a communication processor.

The memory may include, for example, a volatile or nonvolatile memory.

The interface may include, for example, a high definition multimedia interface (HDMI), a universal serial bus (USB) interface, an SD card interface, and/or an audio interface. For example, the interface may electrically or physically connect the electronic device 300 to an external electronic device, and may include a USB connector, an SD card/MMC connector, or an audio connector.

The battery 350 is a device for supplying power to at least one component of the electronic device 300, and may include, for example, a non-rechargeable primary battery, a rechargeable secondary battery, or a fuel cell. At least a portion of the battery 350 may be disposed on substantially the same plane as the PCB 340, for example. The battery 350 may be integrally disposed inside the electronic device 300 or may be disposed detachably from the electronic device 300.

The antenna 370 may be disposed between the second housing 380 and the battery 350. The antenna 370 may include, for example, a near field communication (NFC) antenna, a wireless charging antenna, and/or a magnetic secure transmission (MST) antenna. The antenna 370 may, for example, perform short-range communication with an external device or wirelessly transmit/receive power necessary for charging. According to another embodiment, an antenna structure may be formed by a portion of the first housing 310 and/or the first support member 311 or a combination thereof.

Recently, there is a need for the electronic device 1, which might be a smartphone, a tablet personal computer (PC), or a wearable device, to have a front plate member having a certain strength capable of preventing breakage from an external impact and also having bending performance commensurate with folding of a flexible display. The thin-film glass module 100 disposed on a front plate area of the electronic device 1 will now be described.

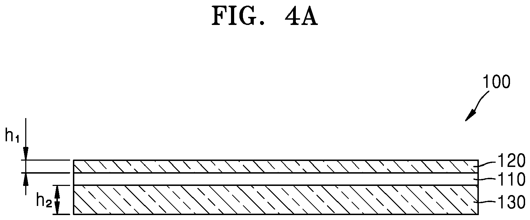

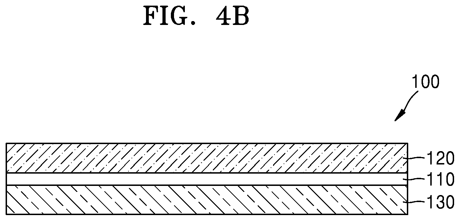

FIG. 4A is a cross-sectional view of a thin-film glass module taken along line A-A' shown in FIG. 3B. FIG. 4B is a cross-sectional view of a thin-film glass module taken along line A-A' shown in FIG. 3B.

Referring to FIGS. 4A and 4B, the thin-film glass module 100 according to an example may include a thin-film glass 110, a first coating layer 120, and a second coating layer 130. The thin-film glass 110 may be provided in a flat plate shape having a predetermined thickness. For example, the thin-film glass 110 may include a thermosetting material for chemical strengthening. For example, the thin-film glass 110 may be soda-lime glass, lead-alkali glass, soda borosilicate glass, aluminosilicate glass, or silica glass.

According to various examples, when a front plate of a flexible display device or a rollable display device is implemented using the thin-film glass 110, the thickness of the thin-film glass 110 needs to be small. On the other hand, the thin-film glass 110 disposed on the front surface of a display device needs to have a certain thickness or more to provide a certain strength. For example, when the display device needs to be folded such that the curvature radius of the thin-film glass 110 is at least 0.5 mm, the thin-film glass 110 may be formed to have a thickness of 100 µm or less, for example, 20 µm to 50 µm, 50 µm to 70 µm, or 70 *µ*m to 100 *µ*m. In this case, when an object with a narrow cross section, such as a pen-drop, applies an impact to the upper surface (front surface) of the thin-film glass 110, the entire thin-film glass 110 from a contact portion in contact with the pen-drop may be deformed or damaged.

The thin-film glass 110 having the above-described small thickness not only has very weak pen-drop characteristics, but also has very weak impact resistance due to problems such as waveness of the thin-film glass 110. In order to improve the impact resistance of the thin-film glass 110, the first coating layer 120 and the second coating layer 130 may be disposed above and below the thin-film glass 110.

The first coating layer 120 may be disposed above the thin-film glass 110 to disperse or absorb an impact applied to the upper surface of the thin-film glass 110. For example, when a pen drop impact is applied to the thin-film glass 110, an impact force applied to the upper surface of the thin-film glass 110 may be transmitted to the inside of the thin-film glass 110. In this case, an impact force transmitted to the thin-film glass 110 may be dispersed or absorbed by the first coating layer 120.

Because the first coating layer 120 may be disposed over the entire upper surface of the thin-film glass 110, a difference in the thickness of the thin-film glass 110 and a difference in stress due to flaws in the thin-film glass 110 may be resolved. Accordingly, the impact resistance of the thin-film glass 110 may be improved. In addition, a high-quality display may be provided by minimizing screen distortion or resolution degradation due to flaws of the thin-film glass 110.

For example, the first coating layer 120 may include a material having an elastic modulus of 0.3 MPa to 1500 MPa, for example, 0.3 MPa to less than 150 MPa, 150 MPa to less than 500 MPa, 500 MPa to less than 1000 MPa, or 1000 MPa to less than 1500 MPa. The first coating layer 120 may include a material having an elongation at break of 20% to 270%, for example, 20% to less than 100%, 100% to 200%, or 200% to 270%. The first coating layer 120 may include a material having shore hardness of A10 to D50. For example, the first coating layer 120 may include one or more of a silicon-based material, acrylic and urethane-based materials, and a polyvinyl alcohol (PVA)-based material. The thickness of the first coating layer 120 may be 200 µm or less, for example, greater than 0 µm to less than 20 µm, 10 µm to 100 µm, 20 µm to 70 µm, or 70 µm to 200 µm.

The second coating layer 130 may be disposed below the thin-film glass 110 to disperse or absorb an impact applied to the thin-film glass 110. For example, when a pen drop impact is applied to the upper surface of the thin-film glass 110, an impact force applied to the thin-film glass 110 may be transmitted to the inside of the thin-film glass 110. In this case, the impact force transmitted to the thin-film glass 110 may be dispersed or absorbed by the second coating layer 130.

Because the second coating layer 130 may be disposed over the entire lower surface of the thin-film glass 110, a difference in the thickness of the thin-film glass 110 and a difference in stress due to flaws in the thin-film glass 110 may be resolved. Accordingly, the impact resistance of the thin-film glass 110 may be improved. In addition, a high-quality display may be provided by minimizing screen distortion or resolution degradation due to flaws of the thin-film glass 110.

For example, the second coating layer 130 may include a material having an elastic modulus of 0.3 MPa to 1500 MPa, for example, 0.3 MPa to less than 150 MPa, 150 MPa to less than 500 MPa, 500 MPa to less than 1000 MPa, or 1000 MPa to less than 1500 MPa. The second coating layer 130 may include a material having an elongation at break of 20% to 270%, for example, 20% to less than 100%, 100% to 200%, or 200% to 270%. The second coating layer 130 may include a material having shore hardness of D20 to D80. For example, the second coating layer 130 may include one or more of a silicon-based material, acrylic and urethane-based materials, and a PVA-based material. The thickness of the second coating layer 130 may be 200 µm or less, for example, more than 0 µm to less than 20 µm, 10 µm to 100 µm, 20 µm to 70 µm, or more than 70 µm to 200 µm.

According to one example, the first coating layer 120 and the second coating layer 130 may be formed by a coating process, for example, at least one of a bar coating process, a slot die process, a painting process, a rolling process, a dipping process, a spray process, a dispenser process, a pad printing process, and a silk printing process. However, the present disclosure is not limited thereto, and the first coating layer 120, the second coating layer 130, and the thin-film glass 110 may be provided in a semi-cured state and formed through a lamination process.

A bonding material (not shown) for bonding the first coating layer 120 and the second coating layer 130 and the thin-film glass 110 may be included between the first coating layer 120 and the second coating layer 130 and the thin-film glass 110. For example, a chemical bonding material, for example, silane, may be disposed between the first coating layer 120 and the second coating layer 130 and the thin-film glass 110. In this case, the bonding material disposed between the first coating layer 120 and the second coating layer 130 and the thin-film glass 110 may compensate for the flaws of the thin-film glass 110 and simultaneously perform chemical bonding, thereby improving the impact resistance and flexural strength the thin-film glass 110.

When a pen drop impact is applied to an exposed upper surface of the thin-film glass 110, a pen drop impact force applied to the upper surface of the thin-film glass 110 is transmitted to the lower surface of the thin-film glass 110. At this time, tension is generated from the center of the lower surface of the thin-film glass 110 to which the pen drop impact force has been transmitted, and thus the thin-film glass 110 may be damaged. In order to reinforce a location where the thin film glass 110 is damaged, the second coating layer 130 may be provided to have a greater rigidity than the first coating layer 120. An embodiment in which the second coating layer 130 is provided to have stronger rigidity than the first coating layer 120 will now be described.

Referring back to FIG. 4A, according to an embodiment, the first coating layer 120 and the second coating layer 130 may include the same material, and thus the first coating layer 120 and the second coating layer 130 may include materials having the same elastic modulus. When the first coating layer 120 and the second coating layer 130 include the same material, the thickness of the first coating layer 120 and the thickness of the second coating layer 130 may be adjusted to provide the second coating layer 130 having greater rigidity than that of the first coating layer 120.

For example, when the first coating layer 120 has a first thickness h₁ and the second coating layer 130 has a second thickness h₂, the thickness h₂ of the second coating layer 130 may be designed to be at a predetermined ratio with the first thickness h₁ of the first coating layer 120. According to one example, the ratio of the first thickness h₁ of the first coating layer 120 to the thickness h₂ of the second coating layer 130 may be 0.1 to 2, for example, 0.7 to less than 1, 1 to less than 1.5, or 1.5 to 2. As the second coating layer 130 is disposed to be thicker than the first coating layer 120, an impact force applied more strongly to the lower surface of the thin-film glass 110 may be dispersed and absorbed.

Referring back to FIG. 4B, according to an embodiment, the first coating layer 120 and the second coating layer 130 may include different materials. When the first coating layer 120 and the second coating layer 130 include different materials, an elastic modulus of the material included in the first coating layer 120 and an elastic modulus of the material included in the second coating layer 130 may be adjusted to provide the second coating layer 130 having greater rigidity than that of the first coating layer 120.

For example, when the first coating layer 120 includes a material having a first elastic modulus and the second coating layer 130 has a material having a second elastic modulus, the second elastic modulus of the second coating layer 130 may be provided to be greater than the first elastic modulus of the first coating layer 120. According to one example, the ratio of the first elastic modulus of the first coating layer 120 to the second elastic modulus of the second coating layer 130 may be more than 0 to 1. As the second elastic modulus of the second coating layer 130 is formed to be greater than the first elastic modulus of the first coating layer 120, an impact force applied more strongly to the lower surface of the thin-film glass 110 may be dispersed and absorbed.

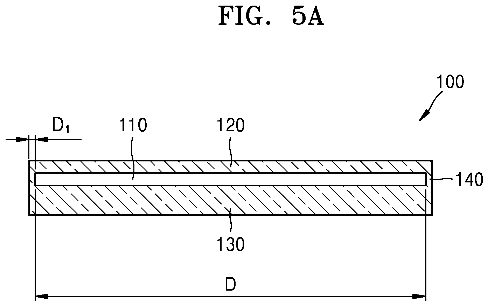

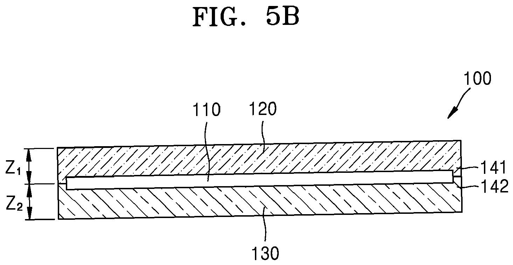

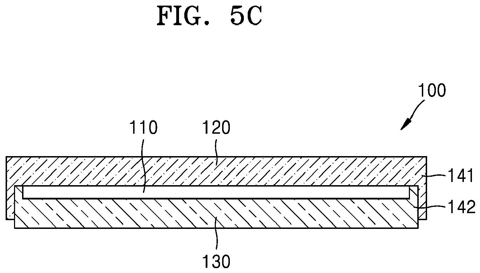

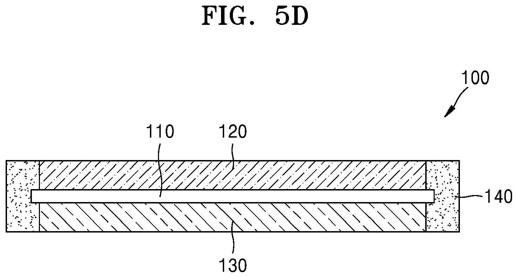

FIG. 5A is a partial cross-sectional view of a thin-film glass module taken along line A-A' shown in FIG. 3B. FIG. 5B is a partial cross-sectional view of a thin-film glass module taken along line A-A' shown in FIG. 3B. FIG. 5C is a partial cross-sectional view of a thin-film glass module taken along line A-A' shown in FIG. 3B. FIG. 5D is a partial cross-sectional view of a thin-film glass module taken along line A-A' shown in FIG. 3B.

Referring to FIG. 5A, the thin-film glass module 100 according to an example may include the thin-film glass 110, the first coating layer 120, the second coating layer 130, and a connection portion 140. Matters related to the thin-film glass 110, the first coating layer 120, and the second coating layer 130 shown in FIG. 5A are substantially the same as those described above with reference to FIG. 4A, so descriptions thereof will be omitted here.

The connection portion 140 may connect the first coating layer 120 to the second coating layer 130. For example, the connection portion 140 may extend along a circumference of the thin-film glass 110. In this case, the connection portion 140 is disposed between the first coating layer 120 and the second coating layer 130 to connect the first coating layer 120 to the second coating layer 130. Accordingly, the thin-film glass 110 may be surrounded by the first coating layer 120, the second coating layer 130, and the connection portion 140, and the connection portion 140 may prevent physical damage, such as cracks, from occurring on lateral sides of the thin-film glass 110.

As shown in FIG. 5A, the connection portion 140 may be provided with the same material as the first coating layer 120 and the second coating layer 130. In this case, the connection portion 140 may be integrally formed with the first coating layer 120 and the second coating layer 130. According to one example, a width D₁ of the connection portion 140 in one direction may be 2 mm or less.

Referring to FIG. 5B, the thin-film glass module 100 according to an example may include the thin-film glass 110, the first coating layer 120, the second coating layer 130, a first connection portion 141, and a second connection portion 142. Matters related to the thin-film glass 110, the first coating layer 120, and the second coating layer 130 shown in FIG. 5B are substantially the same as those described above with reference to FIG. 4B, so descriptions thereof will be omitted here.

The first connection portion 141 may extend along the circumference of the thin-film glass module 100. The first connection portion 141 may extend from lateral sides of the first coating layer 120 by a first length Z₁ in a thickness direction of the thin-film glass module 100. For example, the first connection portion 141 may include the same material as the first coating layer 120. In this case, the first connection portion 141 may be integrally formed with the first coating layer 120.

The second connection portion 142 may extend along the circumference of the thin-film glass module 100. The second connection portion 142 may extend from lateral sides of the second coating layer 130 by a second length Z₂ in the thickness direction of the thin-film glass module 100. For example, the second connection portion 142 may include the same material as the second coating layer 130. In this case, the second connection portion 142 may be integrally formed with the first coating layer 120.

An end of the first connection portion 141 and an end of the second connection portion 142 may be disposed to face each other and be connected to each other. In this case, the first and second connection portions 141 and 142 are disposed between the first coating layer 120 and the second coating layer 130 to connect the first coating layer 120 to the second coating layer 130. For example, the first length Z₁ and the second length Z₂ may be the same as or different from each other.

The thin-film glass 110 according to an example may be surrounded by the first coating layer 120, the second coating layer 130, the first connection portion 141, and the second connection portion 142. Accordingly, the first and second connection portions 141 and 142 may prevent physical damage, such as cracks, from occurring on the lateral sides of the thin-film glass 110. It has been described in the above-described embodiment that the first connection part 141 and the second connection part 142 connected to the first coating layer 120 and the second coating layer 130 may be disposed adjacent to each other. However, the present disclosure is limited thereto. The first connection portion 141 and the second connection portion 142 may be disposed to overlap each other.

Referring to FIG. 5C, it may be seen that a portion of the first connection portion 141 integrally formed with the first coating layer 120 and a portion of the second connection portion 142 integrally formed with the second coating layer 130 are arranged to overlap each other. In order to prevent physical damage, such as cracks, from occurring on the lateral sides of the thin-film glass 110, the connection part 140 may include a material different from the materials included in the first coating layer 120 and the second coating layer 130.

Referring to FIG. 5D, the thin-film glass module according to an embodiment may include the first coating layer 120 disposed above the thin film glass 110, the second coating layer 130 disposed below the thin film glass 110, and the connection portion 140 disposed between the first coating layer 120 and the second coating layer 130. In this case, the connection portion 140 may include a material different from those of the first coating layer 120 and the second coating layer 130. For example, the connection portion 140 may be made to include a material having a higher or lower hardness than the first coating layer 120 and the second coating layer 130, according to use environments.

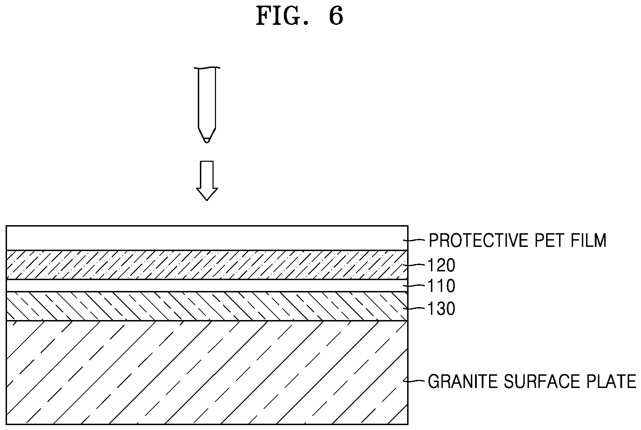

FIG. 6 is a schematic diagram of application of a pen drop impact to a thin-film glass module according to various embodiments.

**[Table 1]**

| Classifi cation | Structure and Property | | | | Evaluation of impact resistance |
|---|---|---|---|---|---|
| | PET protective film for evaluation | First coating layer (Thickness/H ardness) | Thin-film glass Thickness | Second coating layer (Thickness/Har dness) | Pen drop damage height (mm) |
| Compa rative exampl e | 50um | | 30um | | 50 |
| Embodi ment 1 | 50um | 30um / A20 | 30um | 6um / D35 | 160 |
| Embodi ment 2 | 50um | 30um / A20 | 30um | 50um / D35 | 220 |
| Embodi ment 3 | 50um | 30um / D40 | 30um | 30um / D40 | 140 |
| Embodi ment 4 | 50um | 30um / A40 | 30um | 30um / D60 | 260 |

Referring to FIG. 6, the thin-film glass 110 is disposed on a granite surface plate according to a comparative example and an embodiment. The thin-film glass 110 may be in a state in which reinforcement processing has been completed in a CNC process, and may have a thickness of 30 um. In both a comparative example and embodiments, a 50umm protective PET film is disposed above the thin-film glass 110 to be placed on the granite surface plate, and a pen having a ball size of 0.7mm is dropped to evaluate a product until the product is damaged, and a maximum height where damage does not occur is recorded. In a comparative example, the thin-film glass 110 is in a bare thin-film glass state in which special coating layers are not disposed above and below the thin-film glass 110. In embodiment 1, a first coating layer 120 having a Shore hardness of A20 and a thickness of 30um is disposed above the thin-film glass 110, and a second coating layer 130 having a Shore hardness of D35 and a thickness of 6um is disposed below the thin-film glass 110. In embodiment 2, a first coating layer 120 having a Shore hardness of A20 and a thickness of 30um is disposed above the thin-film glass 110, and a second coating layer 130 having a Shore hardness of D35 and a thickness of 50um is disposed below the thin-film glass 110. In embodiment 3, a first coating layer 120 having a Shore hardness of A40 and a thickness of 30um is disposed above the thin-film glass 110, and a second coating layer 130 having a Shore hardness of D40 and a thickness of 30um is disposed below the thin-film glass 110. In embodiment 4, a first coating layer 120 having a Shore hardness of A40 and a thickness of 30um is disposed above the thin-film glass 110, and a second coating layer 130 having a Shore hardness of D60 and a thickness of 30um is disposed below the thin-film glass 110.

Referring to Table 1, compared to a comparative example in which special coating layers are not disposed above and below the thin-film glass 110, in embodiments 1 through 4 in which special coating layers are disposed above and below the thin-film glass 110, pen drop characteristics are improved.

In addition, in embodiment 2 in which the thickness of the second coating layer 130 disposed below the thin-film glass 110 is larger among embodiments 1 and 2 in which the first coating layer 120 and the second coating layer 130 include materials having the same rigidity, the pen drop characteristics are improved.

In addition, in embodiment 4 in which the second coating layer 130 is provided to have larger rigidity among embodiments 3 and 4 in which the first coating layer 120 and the second coating layer 130 have the same thickness, the pen drop characteristics are improved.

Accordingly, compared to a bear thin-film glass in which special coating layers are not disposed above and below the thin-film glass 110, when the first and second coating layers 120 and 130 are disposed above and below the thin-film glass 110, the pen drop characteristics are improved.

When a pen drop impact is applied to an exposed upper surface of the thin-film glass 110, a pen drop impact force applied to the upper surface of the thin-film glass 110 is transmitted to the lower surface of the thin-film glass 110. At this time, tension is generated from the center of the lower surface of the thin-film glass 110 to which the pen drop impact force has been transmitted, and thus the thin-film glass 110 may be damaged. Accordingly, in order to reinforce a location where the thin film glass 110 is damaged, the second coating layer 130 may be provided to have a greater rigidity than the first coating layer 120, and, when the second coating layer 130 is formed to be thicker than the first coating layer 120, the pen drop characteristics are improved.

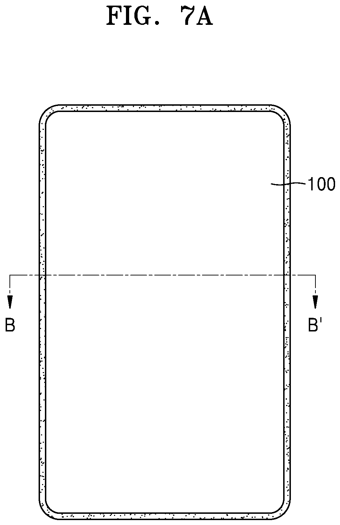

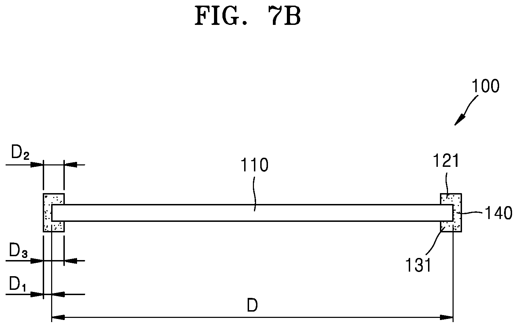

FIG. 7A is a front view of a thin-film glass module according to various embodiments. FIG. 7B is a cross-sectional view of a thin-film glass module taken along line B-B' shown in FIG. 7A.

Referring to FIGS. 7A and 7B, the thin-film glass module 100 according to an example may include the thin-film glass 110, a 1-1^{st} coating layer 121, a 2-1^{st} coating layer 131, and a connection portion 140. The 1-1^{st} coating layer 121 may have a predetermined first width D₂ and may be disposed above the thin-film glass 110. For example, the first width D₂ of the 1-1^{st} coating layer 121 may be 4.0 mm or less. The 1-1^{st} coating layer 121 may extend to surround the circumference of the thin-film glass 110. A width D₁ from an outside end to a glass end may be 0.1 mm or more. Accordingly, a physical impact applied to the lateral sides of the thin-film glass 110 may be dispersed or absorbed by the 1-1^{st} coating layer 121.

For example, the 1-1^{st} coating layer 121 may include a material having an elastic modulus of 0.3 MPa to 1500 MPa, for example, 0.3 MPa to less than 150 MPa, 150 MPa to less than 500 MPa, 500 MPa to less than 1000 MPa, or 1000 MPa to less than 1500 MPa. The 1-1^{st} coating layer 121 may include a material having an elongation at break of 20% to 270%, for example, 20% to less than 100%, 100% to 200%, or 200% to 270%. The 1-1^{st} coating layer 121 may include a material having shore hardness of A10 to D50. For example, the 1-1^{st} coating layer 121 may include one or more of a silicon-based material, acrylic and urethane-based materials, and a PVA-based material. The thickness of the 1-1^{st} coating layer 121 may be 200 µm or less, for example, more than 0 µm to less than 20 µm, 20 µm to 70 µm, or 70 µm to 200 µm.

The 2-1^{st} coating layer 131 may have a predetermined second width D₃ and may be disposed below the thin-film glass 110. For example, the second width D₃ of the 2-1^{st} coating layer 131 may be 4.0 mm or less. The 2-1^{st} coating layer 131 may extend to surround the circumference of the thin-film glass 110. Accordingly, a physical impact applied to the lateral sides of the thin-film glass 110 may be dispersed or absorbed by the 2-1^{st} coating layer 131.

For example, the 2-1^{st} coating layer 131 may include a material having an elastic modulus of 0.3 MPa to 1500 MPa, for example, 0.3 MPa to less than 150 MPa, 150 MPa to less than 500 MPa, 500 MPa to less than 1000 MPa, or 1000 MPa to less than 1500 MPa. The 2-1^{st} coating layer 131 may include a material having an elongation at break of 20% to 270%, for example, 20% to less than 100%, 100% to 200%, or 200% to 270%. The 2-1^{st} coating layer 131 may include a material having shore hardness of D20 to D80. For example, the 2-1^{st} coating layer 131 may include one or more of a silicon-based material, acrylic and urethane-based materials, and a PVA-based material. The thickness of the 2-1^{st} coating layer 131 may be 200 µm or less, for example, more than 0 µm to less than 20 µm, 20 µm to 70 µm, or 70 µm to 200 µm.

The connection portion 140 may connect the 1-1^{st} coating layer 121 to the 2-1^{st} coating layer 131. For example, the connection portion 140 may extend along a circumference of the thin-film glass 110. In this case, the connection portion 140 is disposed between the 1-1^{st} coating layer 121 and the 2-1^{st} coating layer 131 to connect the 1-1^{st} coating layer 121 to the 2-1^{st} coating layer 131. According to one example, the 1-1^{st} coating layer 121, the 2-1^{st} coating layer 131, and the connection portion 140 may include the same materials. In this case, the 1-1^{st} coating layer 121, the 2-1^{st} coating layer 131, and the connection portion 140 may be integrally formed with one another. However, the present disclosure is not limited thereto, and the 1-1^{st} coating layer 121, the 2-1^{st} coating layer 131, and the connecting portion 140 may be formed as special components including different materials.

According to one example, the lateral sides of the thin-film glass 110 may be surrounded by the 1-1^{st} coating layer 121, the 2-1^{st} coating layer 131, and the connection portion 140. Accordingly, the 1-1^{st} coating layer 121, the 2-1^{st} coating layer 131, and the connection portion 140 may prevent physical damage, such as cracks, from occurring on the lateral sides of the thin-film glass 110.

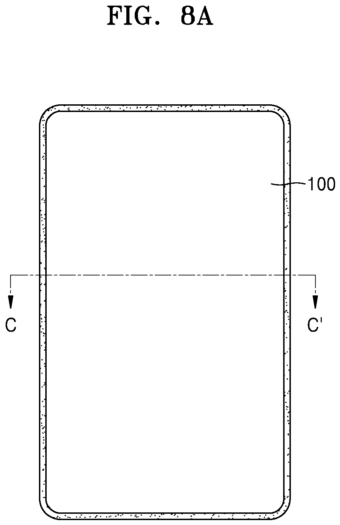

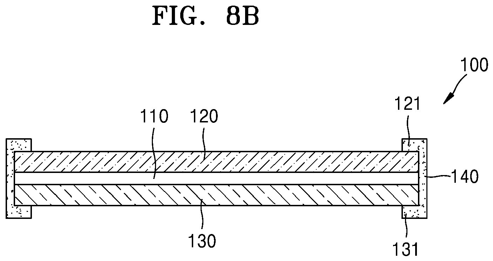

FIG. 8A is a front view of a thin-film glass module according to various embodiments. FIG. 8B is a cross-sectional view of a thin-film glass module taken along line C-C' shown in FIG. 8A.

Referring to FIGS. 8A and 8B, the thin-film glass module 100 according to an example may include a double coating portion to absorb and disperse an impact applied by an object having a narrow cross section, such as a pen-drop, to one surface of the thin-film glass 110, and an impact applied by the object to the lateral sides of the thin-film glass 110.

For example, the thin-film glass module 100 may include the first coating layer 120 and the second coating layer 130 disposed on an upper surface and a lower surface of the thin-film glass 110. Accordingly, the impact applied to one surface of the thin-film glass 110 may be dispersed and absorbed.

The thin-film glass module 100 may also include the 1-1^{st} coating layer 121, the 2-1^{st} coating layer 131, and the connection portion 140 disposed to surround the lateral sides of the thin-film glass 110. In this case, the 1-1^{st} coating layer 121, the 2-1^{st} coating layer 131, and the connection portion 140 may be arranged to surround the lateral sides of the thin-film glass 110, the first coating layer 120, and the second coating layer 130. Accordingly, the impact applied to the lateral sides of the thin-film glass 110 may be dispersed and absorbed.

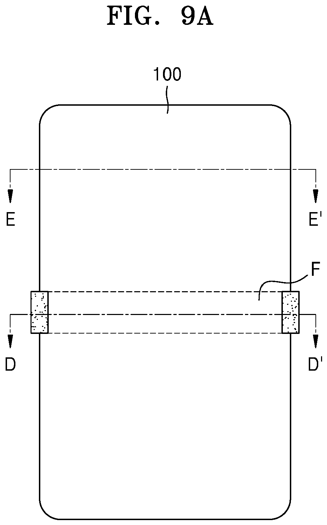

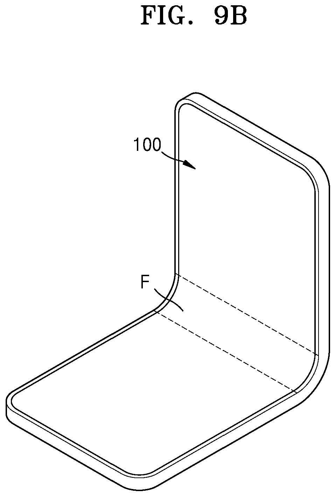

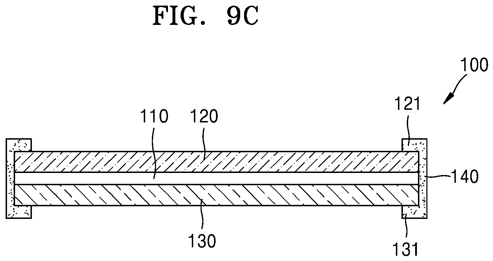

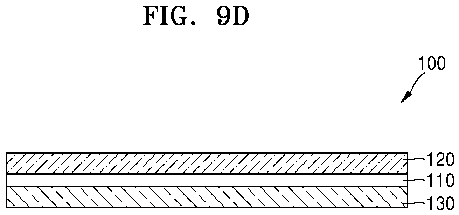

FIG. 9A is a front view of a thin-film glass module according to various embodiments. FIG. 9B is a perspective view of a thin-film glass module according to various embodiments. FIG. 9C is a cross-sectional view of a thin-film glass module taken along line D-D' shown in FIG. 9A. FIG. 9D is a cross-sectional view of a thin-film glass module taken along line E-E' shown in FIG. 9A.

Referring to FIGS. 9A through 9D, the thin-film glass module 100 according to an example may include the first coating layer 120 and the second coating layer 130 disposed on the upper surface and the lower surface of the thin-film glass 110. When a front plate of a flexible display device is implemented using the thin-film glass110, the thickness of the thin-film glass 110 needs to be small. On the other hand, the thin-film glass 110 disposed on the front surface of a display device needs to secure a certain strength. In order to improve the impact resistance of the thin-film glass 110, the first coating layer 120 and the second coating layer 130 may be disposed above and below the thin-film glass 110.

When the thin-film glass module 100 is used in a flexible display device, some areas may be bent. For example, as shown in FIGS. 9A and 9B, a bending area F included in the thin-film glass module 100 may be repeatedly bent. In this case, strength of lateral sides of the bending area F that is bent to have a predetermined radius of curvature may decrease due to a repeated tensile stress.

As shown in FIG. 9C, the thin-film glass module 100 according to an example may include the 1-1^{st} coating layer 121, the 2-1^{st} coating layer 131, and the connection portion 140 disposed to surround the lateral sides of the bending area F. According to one example, the 1-1^{st} coating layer 121 and the 2-1^{st} coating layer 131 may extend along the bending area F among the circumference of the thin-film glass 110. Accordingly, the 1-1^{st} coating layer 121, the 2-1^{st} coating layer 131, and the connection portion 140 may be disposed to surround the lateral sides of the bending area F, and may disperse and absorb an impact applied to the lateral sides of the bending area F.

On the other hand, the 1-1^{st} coating layer 121, the 2-1^{st} coating layer 131, and the connection portion 140 may not be disposed on the remaining circumference of the thin-film glass 110 except for the bending area F, as shown in FIG. 9D. Accordingly, difficulties and cost increases in unnecessary manufacturing may be prevented.

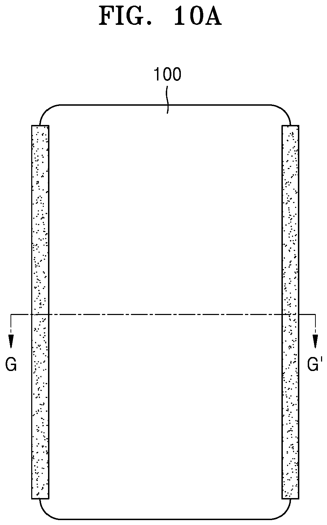

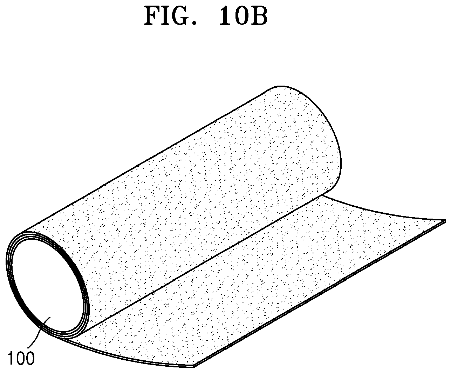

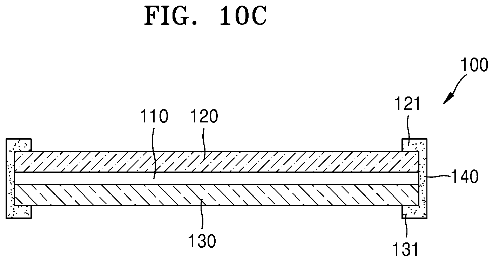

FIG. 10A is a front view of a thin-film glass module according to various embodiments. FIG. 10B is a perspective view of a thin-film glass module according to various embodiments. FIG. 10C is a cross-sectional view of a thin-film glass module taken along line G-G' shown in FIG. 10A.

When the thin-film glass module 100 is used in a rollable display device, the entire area of the thin-film glass module 100 may be bent. For example, as shown in FIGS. 10A and 10B, the entire area of the thin-film glass module 100 may be a bending area that is bent to have a predetermined radius of curvature.

As shown in FIGS. 10A and 10C, the thin-film glass module 100 according to an example may include the 1-1^{st} coating layer 121, the 2-1^{st} coating layer 131, and the connection portion 140 disposed to surround the lateral sides of the thin-film glass 110 in a lengthwise direction of the thin-film glass 110. According to one example, the 1-1^{st} coating layer 121 and the 2-1^{st} coating layer 131 may extend to surround the lateral sides of the thin-film glass 110 in the lengthwise direction of the thin-film glass 110. Accordingly, the 1-1^{st} coating layer 121, the 2-1^{st} coating layer 131, and the connection portion 140 may be disposed to surround the lateral sides of the thin-film glass 110 in the lengthwise direction of the thin-film glass 110, and may disperse and absorb an impact applied to the lateral sides of the thin-film glass 110 in the lengthwise direction of the thin-film glass 110.

The term "module", as used herein, may include a unit implemented as hardware, software, or firmware. For example, the term "module" may be interchangeably used with the term a "logic", a "logical block", a "component", or a "circuit". The "module" may be an integrally formed component, a minimum unit of the component performing one or more functions, or a part of the minimum unit. For example, according to an embodiment, the "module" may be implemented in the form of an application-specific integrated circuit (ASIC).

Various embodiments of this document may be implemented as software (e.g., a program 40) including one or more instructions stored in a storage medium (e.g., an internal memory 36 or an external memory 38) readable by a machine (e.g., the electronic device 1). For example, a processor (e.g., the processor 20) of the machine (e.g., the electronic device 1) may call at least one instruction among one or more instructions stored from the storage medium and execute the at least one instruction. This makes it possible for the machine to be operated to perform at least one function according to the called at least one instruction. Examples of the one or more instructions may include codes created by a compiler, or codes executable by an interpreter. A machine-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored.

According to an embodiment, a method according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store (e.g., Play Store^{™}) or between two user devices (e.g., smartphones) directly and online. When distributed online, at least part of the computer program product may be temporarily generated or at least temporarily stored in a machine-readable storage medium, such as a memory of a manufacturer's server, a server of the application store, or a relay server.

According to various embodiments, each (e.g., a module or program) of the above-described components may include a singular or a plurality of entities, and some of the plurality of entities may be separately disposed in other components. According to various embodiments, one or more components or operations among the above-described corresponding components may be omitted, or one or more other components or operations may be added. Alternatively or additionally, a plurality of components (e.g., a module or a program) may be integrated into one component. In this case, the integrated component may perform one or more functions of each of the plurality of components in the same or similar manner as or to those performed by the corresponding component among the plurality of components prior to the integration. According to various embodiments, operations performed by modules, programs, or other components may be executed in a sequential, parallel, iterative, or heuristic manner. Alternatively, one or more of the operations may be performed in a different order or may not be performed, or one or more other operations may be added.

## Claims

1. A thin-film glass module comprising:
a thin-film glass having a predetermined thickness and a flat shape;
a first coating layer disposed above the thin-film glass; and
a second coating layer disposed below the thin-film glass.

2. The thin-film glass module of claim 1, wherein the first coating layer and the second coating layer have elastic moduli of 0.3 MPa to 1500 MPa.

3. The thin-film glass module of claim 1, wherein the first coating layer and the second coating layer have thicknesses of 5 *µ*m to 200 *µ*m.

4. The thin-film glass module of claim 1, further comprising a connection portion extending along a circumference of the thin film glass and connecting the first coating layer to the second coating layer.

5. The thin-film glass module of claim 1, wherein the first coating layer and the second coating layer include same materials, and a ratio of a first thickness of the first coating layer to a second thickness of the second coating layer is 0.1 to 2.

6. The thin-film glass module of claim 1, wherein the first coating layer and the second coating layer include different materials, and a ratio of a first elastic modulus of the first coating layer to a second elastic modulus of the second coating layer is more than 0 to 1.

7. The thin-film glass module of claim 1, wherein the thin-film glass has a thickness of 100 µm or less.

8. A thin-film glass module comprising:
a thin-film glass having a predetermined thickness and a flat shape;
a 1-1^{st} coating layer having a predetermined first width, extending along a circumference of the thin film glass, and disposed above the thin film glass;
a 2-1^{st} coating layer having a predetermined second width, extending along the circumference of the thin film glass, and disposed below the thin film glass; and
a connection portion extending along the circumference of the thin film glass and connecting the 1-1^{st} coating layer to the 2-1^{st} coating layer.

9. The thin-film glass module of claim 8, wherein the first width of the 1-1^{st} coating layer in one direction is 4.0 mm or less, the second width of the 2-1^{st} coating layer in one direction is 4.0 mm or less and extends along the circumference of the thin-film glass, and a width of the connecting portion connecting the 1-1^{st} coating layer to the 2-1^{st} coating layer is 0.1 mm or more.

10. The thin-film glass module of claim 8, wherein the 1-1^{st} coating layer and the 2-1^{st} coating layer have elastic moduli of 0.3 MPa to 1500 MPa.

11. The thin-film glass module of claim 8, further comprising:
a first coating layer disposed over an upper surface of the thin film glass, between the upper surface of the thin film glass and the 1-1^{st}coating layer; and
a second coating layer disposed over a lower surface of the thin film glass, between the lower surface of the thin film glass and the 2-1^{st}coating layer.

12. The thin-film glass module of claim 8, wherein the 1-1^{st} coating layer and the 2-1^{st} coating layer extend along a bending area bent to have a predetermined radius of curvature among the circumference of the thin film glass.

13. The thin-film glass module of claim 12, wherein the thin film glass has a radius of curvature of 0.5 mm or less in the bending area.

14. The thin-film glass module of claim 8, wherein the thin film glass has a thickness of 100 µm or less.

15. An electronic device comprising:
the thin-film glass module of one of claims 1 through 14; and
a display module disposed below the thin-film glass module.
